# EUROPÄISCHE PATENTANMELDUNG

(11) **EP 4 163 056 A1**
(43) Veröffentlichungstag der Anmeldung: **12.04.2023**
(21) Anmeldenummer: 22164497.4
(22) Anmeldetag: 25.03.2022
(51) Int. Cl.: B24B 27/00, B24B 51/00, G05B 19/4065, B24B 21/00, G05B 19/4093, B24B 49/18

(54) **VORRICHTUNG UND VERFAHREN ZUM BEREITSTELLEN EINES VORSCHLAGS ZUR OPTIMALEN EINSTELLUNG EINER BLECHBEARBEITUNGSMASCHINE**

(30) Priorität: 06.10.2021 DE 102021125911
(71) Anmelder: ARKU Maschinenbau GmbH, 76532 Baden-Baden (DE)
(72) Erfinder: Burtscher, Jacques, 67480 Roeschwoog (FR)
(74) Vertreter: Durm Patentanwälte PartG mbB

(57) **Zusammenfassung**

Eine Maschine (10) zum Bearbeiten von Blechteilen hat mehrere Bearbeitungsstationen entlang eines durchgängigen Transportbands (11), zum Beispiel erstes Schleifbandaggregat (12) mit endlos umlaufendem Schleifband (12a), Bürstenaggregat (13) mit horizontal rotierenden Schleifbürsten (13a) und zweites Schleifbandaggregat (14) mit feinkörnigem Schleifband (14a). Die drei Bearbeitungsstationen können unabhängig voneinander eingestellt werden, die Bearbeitungswerkzeuge sind austauschbar. Die Kenndaten der Bearbeitungswerkzeuge sind in einem Werkzeugspeicher (15) abgespeichert. Die Maschine (10) verfügt über eine Vorrichtung (20) zum Bereitstellen eines Vorschlags zur optimalen Einstellung sowie über ein Bediener-Terminal (30) mit einem Touch-Screen (31), über den der Benutzer Eingaben vornehmen kann und/oder Informationen von bzw. über die Maschine erhält. Basierend auf den vom Benutzer eingegebenen Daten sowie den in der Maschine (10) gespeicherten Daten erhält der Benutzer einen Vorschlag für die optimale Einstellung der Maschine und wird gegebenenfalls zum Werkzeugwechsel aufgefordert.

## Beschreibung

Die vorliegende Erfindung betrifft eine Vorrichtung zum Bereitstellen eines Vorschlags zur optimalen Einstellung einer Blechbearbeitungsmaschine mit mehreren, entlang einem Transportband angeordneten Bearbeitungsstationen mit Bearbeitungswerkzeugen. Die Erfindung betrifft ferner ein Verfahren zum Bereitstellen eines Vorschlags zur optimalen Einstellung einer solchen Blechbearbeitungsmaschine und ferner eine entsprechend ausgebildete Maschine.

Beim Schneiden und Stanzen von Teilen aus Stahlblech bilden sich an den Schnittkanten und den Rändern von Löchern und Ausnehmungen störende Grate, die an der Oberseite bzw. Unterseite überstehen. Speziell bei Teilen, die aus mehreren Zentimeter dickem Stahlblech hergestellt sind, bedarf es größeren technischen Aufwands, diese zu entgraten, die Kanten zu verrunden und die Oberfläche plan zu schleifen.

DE 20 2020 107 308 U1 beschreibt eine Blechbearbeitungsmaschine mit drei Bearbeitungsstationen, welche entlang eines durchgängigen Transportbands in Durchlaufrichtung des Werkstücks hintereinander angeordnet sind. Jede Bearbeitungsstation ist mit einem unterschiedlichen Bearbeitungswerkzeug bestückt.

Die erste Bearbeitungsstation ist ein erstes Schleifbandaggregat mit einem grobkörnigen Schleifband, das endlos umläuft und von einem Elektromotor angetrieben wird. Diese Bearbeitungsstation dient dem Entgraten. Überstehende Grate werden von dem grobkörnigen Schleifband abgeschliffen. Hierzu muss der Bearbeitungsspalt bzw. die Zustellung, also der Abstand zwischen dem Schleifband und dem Arbeitstrum des Transportbands, eingestellt werden. Ferner muss die Geschwindigkeit des Schleifbands an das Werkstück angepasst werden.

Die zweite Bearbeitungsstation ist ein Bürstenaggregat mit insgesamt acht Schleifbürsten, von denen vier in Mitlaufrichtung und vier in Gegenlaufrichtung um horizontale Achsen rotieren. Gleichzeitig können sich die Schleifbürsten gemeinsam um eine vertikale Achse drehen. Dadurch ergibt sich eine Multirotations-Bewegung der Schleifbürsten. Die Schleifbürsten bestehen aus einer Vielzahl flexibler Schleiflamellen, die über die Oberfläche des Blechteils streichen und dabei ein Stück weit auch in Ausnehmungen eindringen können. Auf diese Weise wird die Oberfläche des Blechteils geschliffen und gleichzeitig sowohl die seitlichen als auch die innenliegenden Kanten verrundet. Mittels einer zwischen der Antriebseinheit und dem Maschinengestell angeordneten Höhenverstelleinrichtung lässt sich der Bearbeitungsspalt bzw. die Zustellung sehr exakt einstellen. Außerdem können die Rotationsgeschwindigkeit der Schleifbürsten sowie die Umdrehungsgeschwindigkeit um die vertikale Achse eingestellt werden.

Dritte und letzte Bearbeitungseinheit ist ein zweites Schleifbandaggregat, das hinter dem zentralen Bürstenaggregat angeordnet ist. Anders als das erste Schleifbandaggregat hat das zweite Schleifbandaggregat ein feinkörniges Schleifband oder ein Schleifvlies, das wiederum endlos ist und zwischen einer Kontaktwalze und einer Umlenkrolle umläuft. Beide Schleifbandaggregate werden jeweils mit einem eigenen Elektromotor angetrieben. Das zweite Schleifbandaggregat mit dem feinkörnigen Schleifband dient dem Feinschleifen der Oberseite des Blechteils. Der Bearbeitungsspalt bzw. die Zustellung kann unabhängig von den anderen Bearbeitungsstationen sehr exakt eingestellt werden. Ergebnis ist ein sauber entgratetes Werkstück mit verrundeten Kanten und feingeschliffener Oberfläche.

Auch die Fördergeschwindigkeit des Transportbands, mit dem das zu bearbeitende Blechteil unter den Bearbeitungswerkzeugen der Bearbeitungsstationen vorbeibewegt wird, lässt sich einstellen und an die jeweilige Bearbeitungssituation anpassen.

Die Bearbeitungsstationen können mit verschiedenen Bearbeitungswerkzeugen bestückt werden, wozu die Maschine vorzugsweise eine Werkzeug-Schnellwechseleinrichtung hat. Beispielsweise lassen sich in die Schleifbandaggregate Schleifbänder unterschiedlicher Materialien und Körnungen einsetzen, und lassen sich in das Bürstenaggregat unterschiedliche Schleifbürsten einsetzen, beispielsweise solche mit Borsten aus Stahl oder Schleiftrommeln mit einer Vielzahl von flexiblen Schleiflamellen.

Durch die richtige Auswahl der Werkzeuge lassen sich die Ergebnisse für verschiedene Anwendungen verbessern. Die Eignung dieser Werkzeuge variiert, je nach unterschiedlichen Materialarten, Blechstärken oder Konturen des zu bearbeitenden Blechteils. Dadurch erweitert sich das Anwendungsspektrum der Maschine beträchtlich.

Das Bearbeitungsergebnis an der Kante des Blechteils ist oft ein Kompromiss aus Teiledurchsatz bzw. Bearbeitungsdauer und Materialabtrag an der Blechkante. Erhöht man beispielswiese beim Verrunden die Durchlaufgeschwindigkeit, so verringert sich der Kantenradius. Will man dagegen den Radius an der Kante erhöhen, so muss die Bearbeitungsgeschwindigkeit herabgesetzt werden, mit der Folge, dass in der gleichen Zeit weniger Teile durch die Maschine laufen.

Das Zusammenspiel von Maschine und Bearbeitungswerkzeugen muss also gut aufeinander abgestimmt werden. Für eine optimale Kombination aus

Werkzeugauswahl, Einstellwerten für den Bearbeitungsspalt, Drehgeschwindigkeiten der Schleifwerkzeuge und Transportgeschwindigkeit des Transportbands bedarf es großer Erfahrung und einigem Wissen. Bestimmte Kombinationen, beispielsweise eine hohe Transportgeschwindigkeit bei zu kleinem Bearbeitungsspalt, können auch schnell zu großen Schäden an der Maschine sowie Verlust von Werkstücken führen.

Aufgabe der Erfindung ist es, den Bediener mit wenig Erfahrung bei der Einstellung der Maschine und/oder der Auswahl der Werkzeuge zu unterstützen, indem ein Vorschlag zur optimalen Einstellung bereitgestellt wird.

Die Aufgabe wird gelöst durch eine Vorrichtung gemäß dem ersten Patentanspruch.

Die erfindungsgemäße Vorrichtung umfasst zwei Eingangsschnittstellen, wobei die erste Eingangsschnittstelle zum Empfangen von Daten betreffend das Werkstück dient und die zweite Eingangsschnittstelle zum Empfangen von Informationen über die Maschine bzw. die Bearbeitungsstationen und gegebenenfalls die in den Bearbeitungsstationen eingesetzten oder einsetzbaren Bearbeitungswerkzeuge. Auf der Grundlage der eingegebenen bzw. vorhandenen Informationen wird dann ein Vorschlag für die optimale Einstellung der Maschine ermittelt und übermittelt, entweder an den Bediener oder optional auch direkt an die Steuerung der Maschine.

Die Bedienerführung kann mittels eines Bildschirms, insbesondere eines berührungsempfindlichen Bildschirms (Touch-Screen) erfolgen. Beispielsweise wird der Benutzer in einem ersten Eingabefenster dazu aufgefordert, die Daten des Werkstücks einzugeben, insbesondere also Angaben zu Material, Dicke, äußerer Form, Größe, Gewicht, Oberflächenbeschaffenheit und/oder Ausbildung der Kanten. Beispielsweise kann zwischen den Materialien Aluminium, Stahl und Edelstahl gewählt werden sowie zwischen kleiner, mittlerer und großer Stärke der Grate.

In dem folgenden zweiten Eingabefenster kann der Bediener das gewünschte Ergebnis der Bearbeitung eingeben. Beispielsweise kann der Verrundungsradius der Kanten aus vier Größenstufen gewählt werden oder, ob die Oberfläche nur grob geschliffen, fein geschliffen oder satiniert werden soll.

Aus den Informationen, die der Benutzer eingegeben hat, und den Maschinendaten bildet die erfindungsgemäße Vorrichtung einen Schlüssel, der den Bearbeitungsfall abbildet. Dieser Schlüssel wird mit abgespeicherten Schlüsseln früherer oder vorgegebener Bearbeitungsfälle verglichen. Passt der erstellte Schlüssel zu einem der abgespeicherten Schlüssel, wird entweder dieser Schlüssel ausgewählt oder, falls mehrere Schlüssel passen, derjenige Schlüssel, der das beste Arbeitsergebnis verspricht. Wird kein passender Schlüssel gefunden, kann dies zur Ausgabe einer Fehlermeldung führen, woraufhin der Bediener neue, abgeänderte Eingaben vornehmen kann. Gegebenenfalls kann der Einstellvorschlag auch einen Vorschlag zum Werkzeugwechsel umfassen, falls das gewünschte Bearbeitungsergebnis mit der vorhandenen Konfiguration, insbesondere den aktiven Bearbeitungswerkzeugen in den Bearbeitungsstationen, nicht oder nur mit sehr schlechtem Ergebnis ausgeführt werden kann.

Jedes Bearbeitungswerkzeug, das in eine der Bearbeitungsstationen einsetzbar ist, kann in einem Werkzeug- bzw. Schleifmittelspeicher hinterlegt sein. Zu diesem Zweck können die unterschiedlichen Bearbeitungswerkzeuge codiert sein. Jedem Bearbeitungswerkzeug können bestimmte Einstellwerte für die Einstellung der Maschine zugeordnet sein, also beispielsweise Angaben über die zulässige und/oder optimale Drehzahl, die passende Zustellung und/oder die Transportgeschwindigkeit, mit welcher das Blechteil an dem jeweiligen Bearbeitungswerkzeug vorbeigeführt wird.

Wird der von der Auswerteinheit ermittelte Einstellvorschlag akzeptiert, sei es automatisch durch die Logik oder nach manueller Bestätigung durch den Benutzer, so kann der Datensatz direkt an die Maschinensteuerung übergeben werden, um die Einstellungen der Bearbeitungswerkzeuge und/oder der Transportgeschwindigkeit des Transportbands automatisch vorzunehmen.

Die Aufgabe wird auch gelöst durch eine Maschine gemäß dem Patentanspruch 7, welche eine Vorrichtung zum Bereitstellen eines Vorschlags zur optimalen Einstellung, wie vorstehend erläutert, umfasst. Die erfindungsgemäße Maschine verbindet die Eingaben des Benutzers über das Werkstück sowie das gewünschte Arbeitsergebnis mit den bekannten Daten und Parametern der zur Verfügung stehenden Bearbeitungswerkzeuge und stellt die komplette Maschine durch Verknüpfung dieser Informationen automatisch auf den Bearbeitungsfall ein; und zwar so, dass das Ergebnis bei der höchstmöglichen Bearbeitungsgeschwindigkeit in bestmöglicher Qualität erreicht wird. Der Bediener der Maschine muss also nicht mehr probieren, Fehleinstellungen werden vermieden und Erfahrungswerte werden in der Maschine anschließend gespeichert, sodass darauf zurückgegriffen werden kann, wenn ein vergleichbarer Bearbeitungsfall wieder auftritt.

Bei einer besonders bevorzugten Ausführung der erfindungsgemäßen Maschine verfügt diese zudem über eine automatische Verschleißmessung zumindest für eines der Bearbeitungswerkzeuge, beispielsweise das Bürstenaggregat. Das Ergebnis dieser Verschleißmessung kann dann automatisch berücksichtigt und durch die Steuerung ausgeglichen werden, wodurch dem Bediener Nachmessen und Umrechnen erspart bleibt.

Ein weiterer Aspekt der Erfindung betrifft ein Computerprogrammprodukt mit Programmcode zum Durchführen des erfindungsgemäßen Verfahrens zum Bereitstellen eines Vorschlags zur optimalen Einstellung einer Blechbearbeitungsmaschine, wenn der Programmcode auf einem Computer ausgeführt wird. Geschützt sein soll auch ein Speichermedium, auf dem ein Computerprogramm gespeichert ist, welches, wenn es auf einem Computer ausgeführt wird, eine Durchführung des beschriebenen Verfahrens bewirkt.

Im Folgenden wird ein Ausführungsbeispiel der Erfindung unter Bezugnahme auf die beigefügten Abbildungen erläutert. Es zeigen:
- Figur 1: eine Maschine zum Bearbeiten von Blechteilen, schematisch;
- Figur 2: eine Vorrichtung zum Bereitstellen eines Vorschlags zur optimalen Einstellung der Maschine von Fig. 1, in einem Prinzipbild;
- Figur 3: eine Auswahl von Bearbeitungswerkzeugen für die Maschine von Fig. 1;
- Figur 4: ein Verfahren zum Bereitstellen eines Vorschlags zur optimalen Einstellung der Maschine von Fig. 1.

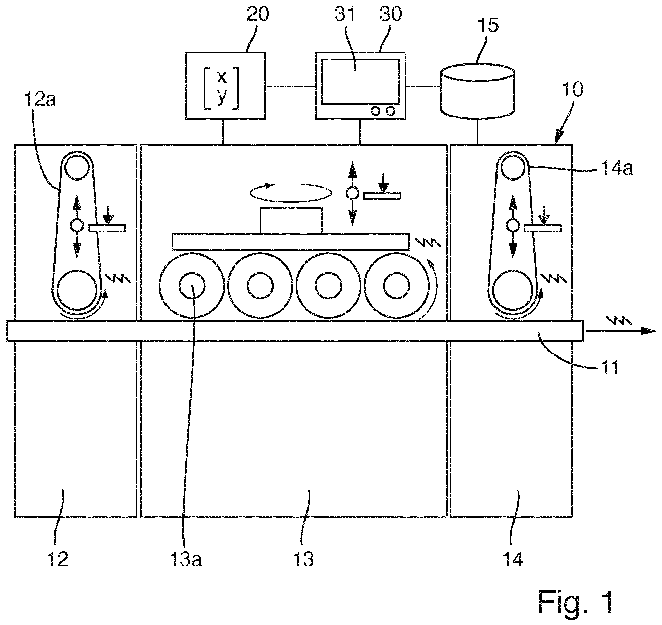

Die in Figur 1 schematisch dargestellte Maschine 10 dient zum Bearbeiten von relativ dicken Blechteilen aus Stahl oder Edelstahl. Die Maschine hat drei Bearbeitungsstationen, welche entlang eines durchgängigen Transportbands 11 in Durchlaufrichtung des Werkstücks hintereinander angeordnet sind.

Die erste Bearbeitungsstation ist ein erstes Schleifbandaggregat 12 mit einem grobkörnigen Schleifband 12a, das endlos umläuft und von einem Elektromotor angetrieben wird. Die zweite Bearbeitungsstation ist ein Bürstenaggregat 13 mit insgesamt acht Schleifbürsten 13a, von denen vier in Mitlaufrichtung und vier in Gegenlaufrichtung um ihre horizontalen Achsen rotieren. Gleichzeitig können sich die Schleifbürsten 13a gemeinsam um eine vertikale Achse drehen. Dadurch ergibt sich eine Multirotations-Bewegung der Schleifbürsten 13a. Die dritte und letzte Bearbeitungseinheit ist ein zweites Schleifbandaggregat 14, das hinter dem Bürstenaggregat 13 angeordnet ist. Konstruktiv entspricht es weitgehend dem ersten Schleifbandaggregat 12, hat aber ein erheblich feinkörnigeres Schleifband 13a, das zum Feinschleifen der Oberseite des Blechteils dient.

Das zu bearbeitende Blechteil wird auf das Transportband 11 aufgelegt und durchläuft die Maschine 10 von links nach rechts. Zuerst wird das Blechteil mittels des ersten Schleifbandaggregats 12 entgratet. Anschließend werden mittels des Bürstenaggregats 13 die Kanten verrundet und die Oberfläche gebürstet. Zum Schluss wird mittels des Schleifbandaggregats 14 die Oberfläche feingeschliffen und erhält dadurch ein Finish.

Die drei Bearbeitungsstationen, also erstes Schleifbandaggregat 12, Bürstenaggregat 13 und zweites Schleifbandaggregat 14, können unabhängig voneinander eingestellt werden. Sowohl die Bearbeitungsgeschwindigkeit, also die Umlaufgeschwindigkeit der Schleifbänder in den Schleifbandaggregaten 12 bzw. 14, als auch die Rotationsgeschwindigkeit der Schleifbürsten 13a können ebenso eingestellt werden wie die vertikale Position über dem Transportband 11. Dadurch lässt sich der Bearbeitungsspalt, durch den das zu bearbeitende Blechteil transportiert wird, einstellen. Der Bearbeitungsspalt wird auch als Zustellung bezeichnet und definiert den Abstand zwischen der Oberseite des Transportbands 11 und der Oberseite des Bearbeitungswerkzeugs.

Sowohl die Schleifbänder 12a, 14a als auch die Schleifbürsten 13a lassen sich mittels einer Schnellwechseleinrichtung austauschen. Beispielsweise kann das Schleifband 14a gegen ein Schleifband mit anderer Körnung ausgetauscht werden oder können die Schleifbürsten 13a gegen andere Schleifbürsten, beispielsweise mit kleineren und flexibleren Schleiflamellen, ausgetauscht werden.

Die Kenndaten der eingesetzten sowie weiterer einsetzbarer Bearbeitungswerkzeuge sind in einem Werkzeugspeicher 15 abgespeichert.

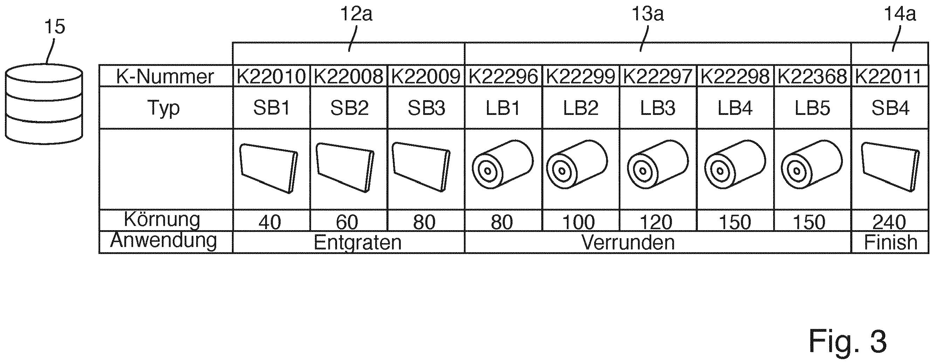

Figur 3 demonstriert beispielhaft den Inhalt des Werkzeugspeichers 15, nämlich Kenn-Nummer, Typ und Körnung einer Anzahl von drei unterschiedlichen Schleifbändern 12a, vier verschiedenen Schleifbändern 13a und einem weiteren Schleifband 14a für das zweite Schleifbandaggregat 14. Ferner ist die Anwendung angegeben, für die das jeweilige Bearbeitungswerkzeug vorgesehen ist, also zum Beispiel Entgraten, Verrunden oder Feinschleifen (Finish).

Die Möglichkeit, unterschiedliche Bearbeitungswerkzeuge in den drei Bearbeitungsstationen einzusetzen und jeweils die vertikale Position bzw. die Zustellung sowie die Bearbeitungsgeschwindigkeit einzustellen, führt zu einer großen Variabilität für die Anpassung der Maschine an unterschiedliche Einsatzzwecke. Hinzukommt die variable Transportgeschwindigkeit des Transportbands 11.

Die Maschine 10 verfügt über eine Vorrichtung 20 zum Bereitstellen eines Vorschlags zur optimalen Einstellung sowie über ein Bediener-Terminal 30 mit einem Touch-Screen 31, über den der Benutzer Eingaben vornehmen kann und/oder Informationen von bzw. über die Maschine erhält.

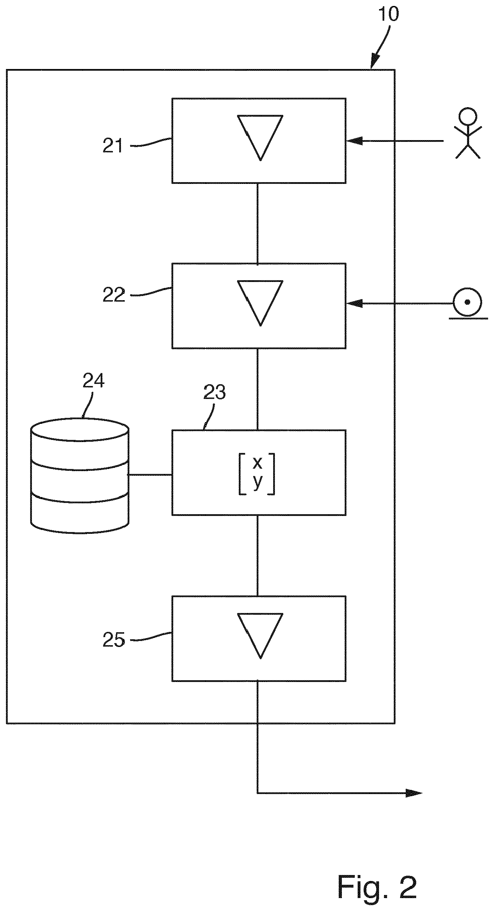

Gemäß Figur 2 umfasst die Vorrichtung 20 eine erste Eingangsschnittstelle 21 zum Empfangen von Werkstückdaten mit Informationen über das zu bearbeitende Blechteil sowie zum Empfangen von Bearbeitungsdaten mit Informationen über das gewünschte Bearbeitungsergebnis. Diese Informationen müssen vom Benutzer eingegeben werden. Hierzu dient eine grafische Benutzerschnittstelle mit Eingabe- und Dialogfenstern, die auf dem Touch-Screen 31 dargestellt werden.

Die Vorrichtung 20 umfasst ferner eine zweite Eingangsschnittstelle 22 zum Empfangen von Maschinendaten mit Informationen über die Bearbeitungsstationen, im vorliegenden Falle also über das erste Schleifbandaggregat 12, das Bürstenaggregat 13 und das zweite Schleifbandaggregat 14 einschließlich Informationen über die dort eingesetzten oder einsetzbaren Bearbeitungswerkzeuge. Diese Maschinendaten werden nicht vom Benutzer eingegeben, sondern sind in der Maschine hinterlegt.

Eine Auswerteinheit 23 ermittelt einen Vorschlag für die Einstellung der Maschine basierend auf den vom Benutzer eingegebenen Werkstückdaten und Bearbeitungsdaten sowie den Maschinendaten. Mögliche, sinnvolle sowie optimale Einstellvorschläge sind in einem Logikspeicher 24 enthalten, auf den die Auswerteinheit 23 zugreifen kann.

Eine Ausgabeschnittstelle 25 dient der Übermittlung des Einstellvorschlags, der dem Benutzer auf dem Touch-Screen 31 angezeigt wird. Der Benutzer kann diesen Einstellvorschlag akzeptieren, woraufhin die vorgeschlagenen Einstellungen an die Steuerung der Maschine 10 übergeben und die Bearbeitungsstationen entsprechend eingestellt werden. Enthält der Bearbeitungsvorschlag ein Bearbeitungswerkzeug, das aktuell nicht in der Maschine eingesetzt ist, aber grundsätzlich verfügbar wäre, so wird der Benutzer über den Touch-Screen 31 zum Werkzeugwechsel aufgefordert.

Die Vorrichtung 20 ist selbstlernend. Werden im Zusammenwirken mit dem Benutzer neue Kombinationen von Bearbeitungswerkzeugen und Einstellungen erzeugt, können diese zu den bereits im Speicher 24 abgespeicherten Einstellvorschlägen hinzugefügt werden.

Zu Beginn der Einstellprozedur kann der Benutzer mittels des Touch-Screens 31 eine automatische Verschleißmessung einzelner oder aller Bearbeitungswerkzeuge auslösen. Die Ergebnisse dieser Verschleißmessungen werden dann automatisch bei der Erstellung der Bearbeitungsvorschläge berücksichtigt. Beispielsweise kann sich der Durchmesser der Schleifbürsten 13a aufgrund von Verschleiß verringert haben, was zu einem zu großen Bearbeitungsspalt führen würde. Wird nun vor der Erstellung des Einstellvorschlags der aktuelle Durchmesser der Schleifbürsten ermittelt, kann der veränderte Durchmesser berücksichtigt und auf diese Weise der Verschleiß kompensiert werden.

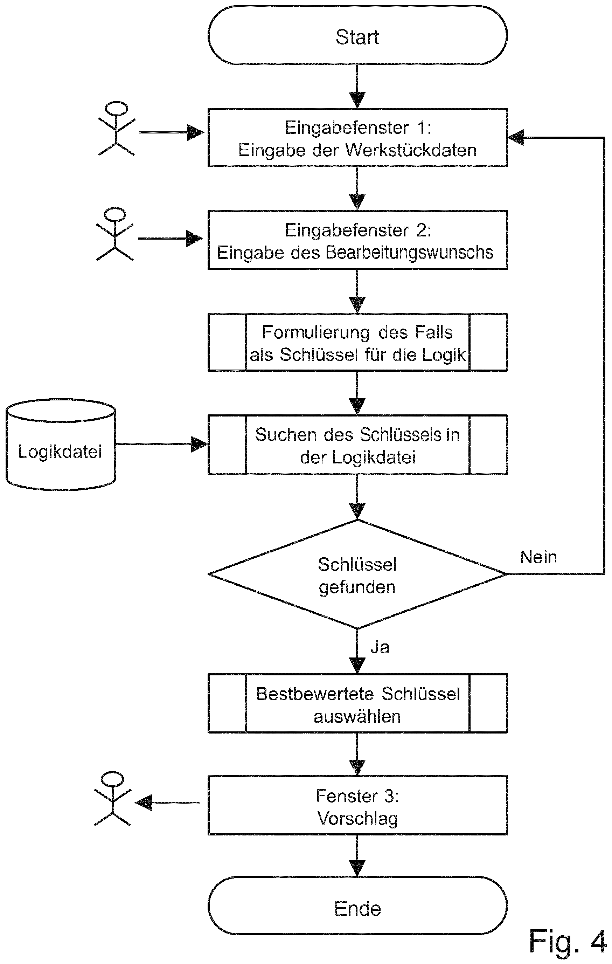

Gemäß Figur 4 kann das Verfahren zum Bereitstellen eines Vorschlags zur optimalen Einstellung der Blechbearbeitungsmaschine aus den vom Benutzer eingegebenen Werkstückdaten und dem Bearbeitungswunsch einen Schlüssel formulieren. Die Auswerteinheit (23 in Fig. 2) kann dann in einer Logikdatei nach einem entsprechenden Schlüssel suchen. Wird kein Schlüssel gefunden, erfolgt eine negative Rückmeldung an den Benutzer. Wird ein passender Schlüssel gefunden, erfolgt die Erstellung eines Vorschlags zur Einstellung der Maschine gemäß diesem Schlüssel. Werden mehrere passende Schlüssel gefunden, werden diese bewertet, insbesondere hinsichtlich der Qualität des Bearbeitungsergebnisses, aber auch hinsichtlich einer möglichst hohen Bearbeitungsgeschwindigkeit. Der am besten bewertete Schlüssel wird dann ausgewählt und zur Grundlage des Einstellvorschlags gemacht.

Bezuqszeichen
- 10: Maschine
- 11: Transportband
- 12: Schleifbandaggregat
- 12a: Schleifband
- 13: Bürstenaggregat
- 13a: Schleifbürsten
- 14: Schleifbandaggregat
- 14a: Schleifband
- 15: Werkzeugspeicher
- 20: Vorrichtung
- 21: erste Eingangsschnittstelle
- 22: zweite Eingangsschnittstelle
- 23: Auswerteinheit
- 24: Logikspeicher
- 25: Ausgabeschnittstelle
- 30: Bediener-Terminal
- 31: Touch-Screen

## Patentansprüche

1. Vorrichtung zum Bereitstellen eines Vorschlags zur optimalen Einstellung einer Blechbearbeitungsmaschine mit mehreren, entlang einem Transportband angeordneten Bearbeitungsstationen mit Bearbeitungswerkzeugen, umfassend:
eine erste Eingangsschnittstelle zum Empfangen von Werkstückdaten mit Informationen über das zu bearbeitende Blechteil und zum Empfangen von Bearbeitungsdaten mit Informationen über das gewünschte Bearbeitungsergebnis;
eine zweite Eingangsschnittstelle zum Empfangen von Maschinendaten mit Informationen über die Bearbeitungsstationen;
eine Auswerteinheit zum Ermitteln eines Vorschlags für die Einstellung der Maschine basierend auf den empfangenen Werkstückdaten, Bearbeitungsdaten und Maschinendaten;
eine Ausgabeschnittstelle zum Übermitteln des Einstellvorschlags.

2. Vorrichtung nach Anspruch 1, wobei die erste Eingangsschnittstelle ausgebildet ist zum Empfangen von Informationen über das Material, die Dicke, die äußere Form, die Größe, das Gewicht, die Oberflächenbeschaffenheit und/oder die Lage und Form der innenliegenden und/oder außenliegenden Kanten des zu bearbeitenden Blechteils.

3. Vorrichtung nach Anspruch 1 oder Anspruch 2, wobei die zweite Eingangsschnittstelle ausgebildet ist zum Empfangen von Informationen über die zu erzielende Oberflächenqualität und/oder den Verrundungsradius der Kanten des zu bearbeitenden Blechteils und/oder die Transportgeschwindigkeit des Transportbands.

4. Vorrichtung nach einem der vorhergehenden Ansprüche, wobei die zweite Eingangsschnittstelle ausgebildet ist zum Empfangen von Informationen über die Art, die Beschaffenheit, die Verfügbarkeit, die Belastbarkeit und/oder den Grad der Abnutzung der Bearbeitungswerkzeuge in den Bearbeitungsstationen.

5. Vorrichtung nach einem der vorhergehenden Ansprüche, wobei der Einstellvorschlag Informationen über die Auswahl der einzusetzenden Bearbeitungswerkzeuge, die Einstellungen der Bearbeitungswerkzeuge und/oder die Transportgeschwindigkeit des Transportbands enthält.

6. Vorrichtung nach einem der vorhergehenden Ansprüche, wobei die Auswerteinheit dazu ausgebildet ist, den Einstellvorschlag an die Steuerung der Maschine zu übergeben.

7. Maschine zum Bearbeiten von Blechteilen, umfassend:
ein Transportband zum Transportieren des zu bearbeitenden Blechteils;
mehrere Bearbeitungsstationen mit Bearbeitungswerkzeugen, welche entlang dem Transportband angeordnet sind, um nacheinander von dem zu bearbeitenden Blechteil durchlaufen zu werden;
eine Vorrichtung gemäß einem der Ansprüche 1 bis 6.

8. Maschine nach Anspruch 7, wobei die Bearbeitungsstationen verschiedene Bearbeitungswerkzeuge zum Entgraten, Schleifen der Oberfläche und/oder Verrunden der Kanten des Blechteils enthalten.

9. Maschine nach Anspruch 7, wobei die Bearbeitungsstationen eine Schnellwechseleinrichtung für die Bearbeitungswerkzeuge umfassen.

10. Verfahren zum Bereitstellen eines Vorschlags zur optimalen Einstellung einer Blechbearbeitungsmaschine mit mehreren, entlang einem Transportband angeordneten Bearbeitungsstationen mit Bearbeitungswerkzeugen, mit den Schritten:
Empfangen von Werkstückdaten mit Informationen über das zu bearbeitende Blechteil;
Empfangen von Bearbeitungsdaten mit Informationen über das gewünschte Bearbeitungsergebnis;
Empfangen von Maschinendaten mit Informationen über die Bearbeitungsstationen;
Ermitteln eines Vorschlags für die Einstellung der Maschine basierend auf den empfangenen Werkstückdaten, Maschinendaten und Bearbeitungsdaten;
Übermitteln des Einstellvorschlags.

11. Verfahren nach Anspruch 10, wobei die Werkstückdaten Informationen über das Material, die Dicke, die äußere Form, die Größe, das Gewicht, die Oberflächenbeschaffenheit und/oder die Ausbildung der Kanten des zu bearbeitenden Blechteils umfassen.

12. Verfahren nach Anspruch 10 oder 11, wobei die Bearbeitungsdaten Informationen über die zu erzielende Oberflächenqualität und/oder den Verrundungsradius des zu bearbeitenden Blechteils umfassen.

13. Verfahren nach einem der Ansprüche 10 bis 12, wobei die Maschinendaten Informationen über die Art, die Beschaffenheit, die Verfügbarkeit, die Belastbarkeit und/oder den Grad der Abnutzung der Bearbeitungswerkzeuge in den Bearbeitungsstationen umfassen.

14. Verfahren nach einem der Ansprüche 10 bis 13, wobei der Einstellvorschlag an die Steuerung der Maschine übergeben wird.

15. Computerprogrammprodukt mit Programmcode zum Durchführen der Schritte des Verfahrens nach Anspruch 10, wenn der Programmcode auf einem Computer ausgeführt wird.
